# EUROPÄISCHE PATENTSCHRIFT

(11) **EP 4 380 879 B1**
(45) Veröffentlichungstag und Bekanntmachung des Hinweises auf die Patenterteilung: **26.03.2025**
(21) Anmeldenummer: 21816343.4
(22) Anmeldetag: 16.11.2021
(51) Int. Cl.: B65G 47/244, B65G 47/32

(54) **VERFAHREN UND VORRICHTUNG ZUM FÖRDERN UND ZUM ÄNDERN EINER ORIENTIERUNG EINES STÜCKIGEN PRODUKTS**
METHOD AND DEVICE FOR CONVEYING AND CHANGING AN ORIENTATION OF A FLOW OF PRODUCTS
PROCÉDÉ ET DISPOSITIF POUR TRANSPORTER ET MODIFIER L'ORIENTATION D'UN FLUX DE PRODUITS

(43) Veröffentlichungstag der Anmeldung: 12.06.2024
(73) Patentinhaber: LOESCH Verpackungstechnik GmbH + Co. KG, 96146 Altendorf (DE)
(72) Erfinder: WOLLER, Daniela, 90762 Fürth (DE); BISPING, Bernhard, 96050 Bamberg (DE); HOFMANN, Benedikt, 96049 Bamberg (DE)
(74) Vertreter: Prüfer & Partner mbB Patentanwälte · Rechtsanwälte
(86) Internationale Anmeldenummer: PCT/EP2021/081874
(87) Internationale Veröffentlichungsnummer: WO 2023/088541

(56) Entgegenhaltungen:
- EP-A1- 2 065 319
- EP-A1- 2 517 989
- DE-A1- 10 261 551
- DE-A1- 102017 206 970
- DE-U1- 29 602 103
- NL-A- 7 302 039

## Beschreibung

Die Erfindung betrifft ein Verfahren und eine Vorrichtung zum Fördern und zum Ändern einer Orientierung bzw. Ausrichtung eines stückigen Produkts, insbesondere eines Produkts das in einem Schlauchbeutel verpackt wurde.

Eine Verpackung mit Schlauchbeuteln ist insbesondere in der Nahrungsmitteltechnologie eine gängige Verpackungstechnik, da es sich dabei um eine hygienische, ökologische und kostengünstige Verpackungsart handelt. Ein Beispiel für schlauchbeutelverpackte Produkte sind Schokoladenriegel. Nach dem Verpacken in den Schlauchbeutel werden die Schlauchbeutelabschnitte, in denen sich die Schokoladenriegel befinden, voneinander separiert und versiegelt und nacheinander als stückige Produkte von beispielsweise Gurtförderungen zur weiteren Verpackung und/oder Etikettierung etc. weitertransportiert.

NL 7 302 039 A offenbart ein Verfahren zum Fördern und zum Ändern einer Orientierung eines stückigen Produkts mit den Schritten:
- Zuführen des Produkts auf eine Produktauflage einer Förder- und Dreheinheit in einer vorbestimmten ersten Orientierung;
- Änderung der Orientierung des Produkts aus der ersten Orientierung zu einer zweiten Orientierung mittels eines in einer vorbestimmten Förderrichtung bewegten ersten Mitnehmers der Förder- und Dreheinheit durch ein bezüglich einer Richtung senkrecht zu der Förderrichtung außermittiges Anstoßen des ersten Mitnehmers an das Produkt und dadurch Einbringen eines Drehimpulses in das Produkt.

NL 7 302 039 A weiter offenbart eine Förder- und Dreheinheit zum Ausführen eines Verfahrens zum Fördern und zum Ändern einer Orientierung eines stückigen Produkts wobei die Förder- und Dreheinheit aufweist: eine Mitnehmertransporteinheit, und eine Produktauflage, wobei die Produktauflage dazu ausgebildet ist, dass das stückige Produkt in einer vorbestimmten Förderrichtung darauf bewegen wird, und die Mitnehmertransporteinheit an der Seite der Produktauflage angeordnet ist, und mindestens einen ersten Mitnehmer aufweist.

Um die Produkte wie beispielsweise Schokoladenriegel in einer bestimmten Stückzahl weiter zu verpacken, z.B. in einen Karton, ist es vorteilhaft, die einzelnen schlauchverpackten Riegel vorab auszurichten, um sie dann gezielt in einen Karton zu füllen, um das Verpackungsvolumen zu minimieren und die Verpackung störungsfrei und schnell zu bewerkstelligen.

Insbesondere wenn die Riegel eine größere Länge als Breite aufweisen, werden sie in der Schlauchverpackungsstation entlang ihrer Längsrichtung transportiert und so in den Schlauchbeutel eingepackt.

Für die weitere Verpackung in den Karton ist es jedoch vorteilhaft, dass diese schlauchverpackten Riegel nicht, wie in den Schlauchbeuteln verpackt und weitertransportiert, in ihrer Längsrichtung verpackt werden, sondern quer, also längs ihrer kurzen Seite zur Verpackungsstation für die Verpackung in den Karton transportiert werden.

Dafür muss die Orientierung der stückigen Produkte von einer Längsausrichtung in Transportrichtung in eine Querausrichtung in Transportrichtung geändert werden. Im Stand der Technik erfolgte dies bisher beispielsweise über Greifer, um eine Prozesssicherheit zu realisieren. Diese Greifer ergreifen beispielsweise mehrere aufeinanderfolgende stückige Produkte, die mittels Schlauchbeutel verpackt wurden, von einer Fördereinrichtung und setzen diese in derselben Orientierung auf eine weitere Fördereinrichtung um, deren Förderrichtung jedoch im rechten Winkel zu der ursprünglichen Förderrichtung liegt. Somit ist nun also die Orientierung der Produkte für ein Verpacken günstig, jedoch ist ein solches Verfahren, bedingt durch den Einsatz von gesteuerten Handlingseinrichtungen, mit einem großen Kostenaufwand verbunden. Zudem wird durch den rechtwinkligen Transportverlauf mehr Platz für die gesamte Verpackungsanlage in der Produktionsstätte verbraucht.

Der Erfindung liegt also die Aufgabe zugrunde, ein Verfahren und eine Vorrichtung zum Fördern und zum Ändern einer Orientierung eines stückigen Produkts bereitzustellen, das die stückigen Produkte prozesssicher und wirtschaftlich in eine für ein Verpacken günstige Orientierung bringt und zudem weniger Platz in der Produktionsstätte verbraucht.

Die Aufgabe wird durch ein Verfahren gemäß Anspruch 1 und eine Förder- und Dreheinheit gemäß Anspruch 8 oder 9 sowie eine Verpackungsanlage gemäß Anspruch 15 gelöst. Vorteilhafte Weiterentwicklungen sind in den abhängigen Ansprüchen enthalten.

Gemäß einem Aspekt der Erfindung enthält ein Verfahren zum Fördern und zum Ändern einer Orientierung eines stückigen Produkts die Schritte:
- Zuführen des Produkts auf eine Produktauflage einer Förder- und Dreheinheit in einer vorbestimmten ersten Orientierung;
- Ändern der Orientierung des Produkts aus der ersten Orientierung in Richtung zu einer zweiten Orientierung mittels eines in einer vorbestimmten Förderrichtung bewegten ersten Mitnehmers der Förder- und Dreheinheit, durch ein bezüglich einer Richtung senkrecht zu der Förderrichtung außermittiges Anstoßen des ersten Mitnehmers an das Produkt und dadurch Einbringen eines Drehimpulses in das Produkt; und
- Fördern des Produkts in der zweiten Orientierung in der Förderrichtung durch Anstoßen und Anliegen eines in der Förderrichtung bewegten zweiten Mitnehmers an das Produkt an mindestens zwei in der Richtung senkrecht zu der Förderrichtung bezüglich einer Mitte des Produkts auf gegenüberliegenden Seiten liegenden Punkten des Produkts.

Durch das Einleiten des Drehimpulses in das stückige Produkt mittels des ersten Mitnehmers, indem dieser außermittig an das Produkt anstößt, kann die Orientierung des Produkts einfach verändert werden. Das außermittige Anstoßen bedeutet, dass das Anstoßen mittels des ersten Mitnehmers in einer Richtung erfolgt, die nicht auf den Massenschwerpunkt des Produkts gerichtet ist, sodass das Produkt gedreht werden kann, wenn der Drehimpuls eingeleitet wird.

Da das Produkt nicht statisch auf der Produktauflage der Förder- und Dreheinheit liegt, sondern mit einer gewissen Grundgeschwindigkeit auf die Produktauflage aufgebracht wird, ist es vorteilhaft, eine entsprechende Geschwindigkeit, mit der der erste Mitnehmers an das stückige Produkt anstößt, einzustellen, um einen geeigneten Drehimpuls in das Produkt einzuleiten, sodass sich das Produkt in einem ausreichenden Ausmaß dreht, ohne jedoch in eine wirbelnde Bewegung überzugehen.

Das so in einem ausreichenden Ausmaß gedrehte Produkt wird dann durch den zweiten Mitnehmer über die mindestens zwei bezüglich einer Mitte des Produkts auf gegenüberliegenden Seiten liegenden Punkten in der zweiten Orientierung stabilisiert und in dieser zweiten Orientierung weiter gefördert. Die Lage der beiden Punkte bezüglich der Mitte des Produkts ist wiederum auf den Massenschwerpunkt bezogen, der bei solchen Produkten üblicherweise in der Mitte liegt.

Somit ist es also möglich, die Orientierung des stückigen Produkts in einer einfachen Weise prozesssicher zu ändern, vorzugsweise um im Wesentlichen 90°.

**In** einer vorteilhaften Ausgestaltung des Verfahrens wird auf das Produkt während der Änderung der Orientierung bzw. während des Förderns mittels der Produktauflage, auf der das Produkt während der Änderung der Orientierung und des Förderns aufliegt, eine definierte Reibkraft aufgebracht, um den Drehimpuls abzubremsen bzw. das Produkt an dem zweiten Mitnehmer in seiner Position zu halten.

Durch das Aufbringen der definierten Reibkraft ist es möglich, trotz einer hohen notwendigen Geschwindigkeit des Produkts, um einen wirtschaftlichen Durchsatz zu erreichen, und einer relativ hohen Drehgeschwindigkeit, um das Produkt innerhalb einer kurzen Strecke zu drehen, sodass es nicht erforderlich ist, die Länge der Produktauflage übermäßig zu erhöhen, die Änderung der Orientierung des Produkts prozesssicher durchzuführen und beizubehalten.

Gemäß einer weiteren vorteilhaften Ausgestaltung des Verfahrens ist die Reibkraft entlang einer Förderstrecke auf der Produktauflage unterschiedlich vorausgewählt, vorzugsweise einstellbar.

Dadurch kann die erforderliche Reibkraft dem momentanen Bewegungszustand des Produktes angepasst werden, um das Verfahren hinsichtlich des wirtschaftlichen Durchsatzes und der kurzen Strecke, innerhalb der sich das Produkt dreht, weiter zu optimieren.

Bei einer weiteren vorteilhaften Ausgestaltung des Verfahrens wird das Produkt in der zweiten Orientierung durch eine weitere Fördereinheit übernommen und weiterbefördert.

Dabei ist es möglich, das Produkt in der für das Verpacken geeigneten Orientierung zu einer Verpackungsstation weiter zu transportieren, ohne dass die Transportrichtung geändert werden muss, sodass ein Layout einer Verpackungsanlage einen geringeren Platzbedarf hat.

**In** einer weiteren vorteilhaften Ausgestaltung des Verfahrens ist eine Fördergeschwindigkeit der weiteren Fördereinheit höher als eine Fördergeschwindigkeit der Förder- und Dreheinheit.

Dies ermöglicht eine prozesssichere Übernahme des Produkts, da es ansonsten zu unkontrollierten Bewegungen des Produkts bei der Übernahme kommen kann.

Gemäß einer weiteren vorteilhaften Ausgestaltung des Verfahrens sind mehrere erste Mitnehmer und mehrere zweite Mitnehmer auf einem umlaufenden Band befestigt vorgesehen und mehrere Produkte werden gleichzeitig durch eine umlaufende Bewegung des Bands gefördert und ihre Orientierung wird geändert.

Die Verwendung des umlaufenden Bands mit den Mitnehmern verbessert den wirtschaftlichen Durchsatz, da ein kontinuierliches Fördern und Ändern der Orientierung bei einer hohen Geschwindigkeit ermöglicht wird.

**In** einer weiteren vorteilhaften Ausgestaltung des Verfahrens schließt die zweite Orientierung zu der ersten Orientierung einen zumindest annähernd rechten Winkel ein.

Dadurch ist das günstige Layout der Verpackungsanlage sichergestellt, da der Verpackungsablauf in einer geraden Linie vonstattengehen kann.

Gemäß einem weiteren Aspekt der Erfindung weist eine Förder- und Dreheinheit zum Ausführen des Verfahrens eine Mitnehmertransporteinheit und eine Produktauflage auf. Die Produktauflage ist dazu ausgebildet, dass das stückige Produkt in einer vorbestimmten Förderrichtung darauf gleitet, und die Mitnehmertransporteinheit ist oberhalb der Produktauflage angeordnet und weist mindestens einen ersten Mitnehmer und einen zweiten Mitnehmer auf, die in der Förderrichtung vorzugsweise simultan bewegbar der Produktauflage zugewandt sind, wobei der mindestens eine erste Mitnehmer und der mindestens eine zweite Mitnehmer jeweils eine Wirkfläche aufweisen, die dazu ausgebildet ist, mit dem Produkt in Kontakt zu kommen. Der mindestens eine erste Mitnehmer und der mindestens eine zweite Mitnehmer sind in einer Breitenrichtung des Produkts senkrecht zu der Förderrichtung nebeneinander an der Mitnehmertransporteinheit angeordnet, und der erste Mitnehmer weist einen Flächenabschnitt seiner Wirkfläche auf, der in der Förderrichtung versetzt zu jedem Flächenabschnitt der Wirkfläche des zweiten Mitnehmers (10) angeordnet ist, insbesondere in der Förderrichtung vorderhalb von jedem Flächenabschnitt der Wirkfläche des zweiten Mitnehmers liegt.

Mit dieser Förder- und Dreheinheit ist es möglich, die Orientierung des stückigen Produkts in einer einfachen Weise prozesssicher zu ändern, da keine zusätzlichen aufwändigen Greifer und Steuerungen erforderlich sind.

Gemäß einem anderen Aspekt der Erfindung weist eine Förder- und Dreheinheit eine Mitnehmertransporteinheit, und eine Produktauflage auf, wobei die Produktauflage dazu ausgebildet ist, dass das stückige Produkt in einer vorbestimmten Förderrichtung darauf gleitet. Die Mitnehmertransporteinheit ist oberhalb der Produktauflage angeordnet, und weist mindestens einen ersten Mitnehmer und mindestens einen zweiten Mitnehmer auf, die in der Förderrichtung simultan bewegbar der Produktauflage zugewandt sind, wobei der mindestens eine erste Mitnehmer so an der Mitnehmertransporteinheit angeordnet ist, dass er dazu ausgebildet ist, bei seiner Bewegung in der Förderrichtung an das in der ersten Orientierung auf der Produktauflage aufliegende Produkte so anzustoßen, dass sich dessen Orientierung durch Einbringen des Drehimpulses zu der zweiten Orientierung ändert, und der mindestens eine zweite Mitnehmer so an der Mitnehmertransporteinheit angeordnet ist, dass er dazu ausgebildet ist, bei seiner Bewegung in der Förderrichtung an mindestens zwei in einer Richtung senkrecht zu der Förderrichtung bezüglich einer Mitte des Produkts in der zweiten Orientierung auf gegenüberliegenden Seiten liegenden Punkten anzustoßen.

Durch diese Vorrichtung kann, durch das Einleiten des Drehimpulses in das stückige Produkt mittels des ersten Mitnehmers, die Orientierung des Produkts einfach von der ersten Orientierung in die zweite Orientierung verändert werden. Das so gedrehte Produkt wird dann durch den zweiten Mitnehmer über die zwei bezüglich einer Mitte des Produkts auf gegenüberliegenden Seiten liegenden Punkten in der zweiten Orientierung stabilisiert und in dieser zweiten Orientierung weiter gefördert. Die Lage der beiden Punkte bezüglich der Mitte des Produkts ist wiederum auf den Massenschwerpunkt bezogen, der bei solchen Produkten üblicherweise in der Mitte liegt.

Auch in dieser Ausgestaltung ist die prozesssichere Änderung der Orientierung des Produkts und Förderung des Produkts einfach möglich.

**In** einer weiteren vorteilhaften Ausgestaltung der Förder- und Dreheinheit weist die Produktauflage an einem Ende einen vorbestimmten Aufnahmebereich auf, in dem das der Förder- und Dreheinheit zugeführte Produkt in der ersten Orientierung auf der Produktauflage aufliegt, wobei eine Breite des Aufnahmebereichs über eine Breite des Produkts in einer Breitenrichtung senkrecht zu der Förderrichtung definiert ist, und der erste Mitnehmer ist so an der Mitnehmertransporteinheit angebracht, dass er einen in der Förderrichtung vorauseilenden an dem Produkt anstoßenden Flächenabschnitt hat, der sich in einem Abschnitt des Aufnahmebereichs zwischen einer Mitte in der Breitenrichtung und einem Rand des Aufnahmebereichs in Richtung einer näher zu dem Aufnahmebereich gelegenen Grenze der Produktauflage entlang der Förderrichtung befindet.

Durch den am Produkt anstoßenden Flächenabschnitt, der sich in dem Abschnitt des Aufnahmebereichs zwischen der Mitte in der Breitenrichtung und dem Rand des Aufnahmebereichs in der Richtung der näher zu dem Aufnahmebereich gelegenen Grenze der Produktauflage entlang der Förderrichtung befindet, ist sichergestellt, dass durch den Flächenabschnitt, der beispielsweise als Stift, der vorzugsweise im Wesentlichen vertikal ausgerichtet ist, ausgebildet ist, und der daher lediglich eine Linienberührung mit dem Produkt erzeugt, prozesssicher der Drehimpuls in das Produkt eingeleitet wird.

Gemäß einer weiteren vorteilhaften Ausgestaltung der Förder- und Dreheinheit weist die Mitnehmertransporteinheit ein umlaufendes Band auf, an dem mehrere erste Mitnehmer und mehrere zweite Mitnehmer angeordnet sind.

Durch diese Ausgestaltung ist ein hoher Durchsatz von Produkten und, damit verbunden, ein wirtschaftlicher Einsatz möglich, ohne dass aufwändige Aktoren und Steuerungsvorrichtungen eingesetzt werden müssen.

Bei einer weiteren vorteilhaften Ausgestaltung der Förder- und Dreheinheit sind mehrere erste und mehrere zweite Mitnehmer vorgesehen, und jeweils ein erster und ein zweiter Mitnehmer sind integral ausgebildet.

Durch die integrale Ausbildung ist eine wirtschaftliche Herstellung der Mitnehmer, und somit der Förder- und Dreheinheit, möglich.

**In** einer weiteren vorteilhaften Ausgestaltung der Förder- und Dreheinheit weist die Produktauflage eine Einrichtung auf, die dazu konfiguriert ist, entlang der Förderrichtung eine unterschiedliche Reibkraft zwischen der Produktauflage und dem Produkt bereitzustellen.

Dadurch kann die erforderliche Reibkraft dem momentanen Bewegungszustand des Produktes angepasst werden, um das Verfahren hinsichtlich des wirtschaftlichen Durchsatz und der kurzen Strecke, in der sich das Produkt dreht, weiter zu optimieren.

Bei einer weiteren vorteilhaften Ausgestaltung der Förder- und Dreheinheit weist die Einrichtung, um entlang der Förderrichtung die unterschiedliche Reibkraft bereitzustellen, Öffnungen in der Produktauflage auf, die vorzugsweise an eine Vakuumanlage angeschlossen sind.

Die Vakuumanlage und die Anordnung und Anzahl und Größe der Öffnungen in der Produktauflage sind so konfiguriert, dass der Einsatz der Vakuumanlage die Einstellung der unterschiedlichen Reibkraft entlang der Förderrichtung ermöglicht und vorzugsweise so konfiguriert ist, dass das Produkt nicht von der Produktauflage abhebt, selbst bei hohen Fördergeschwindigkeiten.

Gemäß einem weiteren Aspekt der Erfindung weist eine Verpackungsanlage die Förder- und Dreheinheit, eine Fördereinheit, die dazu ausgebildet ist, das Produkt in der ersten Orientierung auf die Produktauflage zuzuführen, und eine weitere Fördereinheit, die dazu ausgebildet ist, das Produkt in der zweiten Orientierung zu übernehmen, auf.

Dadurch ist, bei einem geeigneten Transport des Produkts zu der Förder- und Dreheinheit hin und einem geeigneten Transport von der Förder- und Dreheinheit weg, das günstige Layout der Verpackungsanlage sichergestellt, da der Verpackungsablauf in einer geraden Linie vonstattengehen kann.

Nachfolgend wird die Erfindung von anhand von Ausführungsbeispielen unter Bezugnahme auf die beigefügten Zeichnungen näher erläutert.

Insbesondere zeigt
- Fig. 1: eine perspektivische Ansicht eines Teils einer Verpackungsanlage mit einer erfindungsgemäßen Förder- und Dreheinheit;
- Fig. 2: eine Seitenansicht auf die Förder- und Dreheinheit;
- Fig. 3: eine Draufsicht auf eine Produktauflage der Förder- und Dreheinheit, bei der zur besseren Veranschaulichung eine Mitnehmertransporteinheit ausgeblendet ist;
- Fig. 4: eine stark vergrößerte Ansicht eines Ausschnitts aus Fig. 3 in einer Situation vor einem Anstoßen eines ersten Mitnehmers an einem Produkt;
- Fig. 5: eine vergrößerte Ansicht eines Ausschnitts aus Fig. 3 während einer Drehung des Produkts; und
- Fig. 6: eine vergrößerte Ansicht eines Ausschnitts aus Fig. 3 während einer Förderung des Produkts.

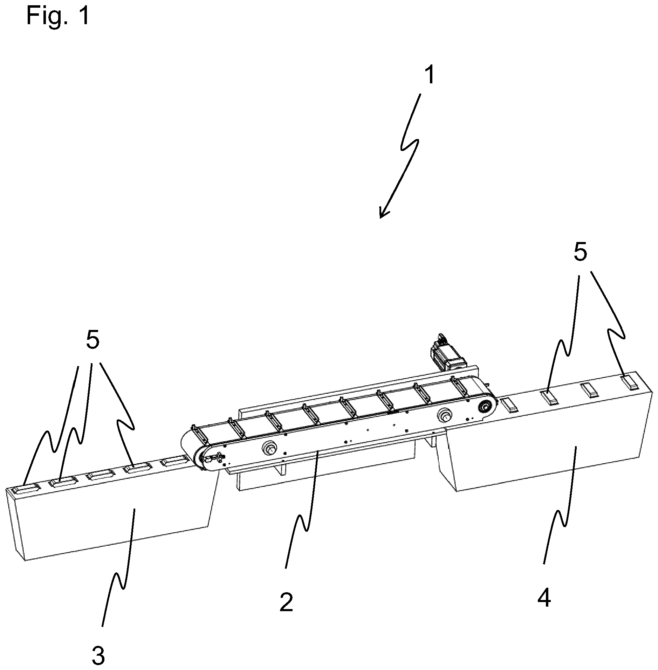

**Fig. 1** zeigt eine perspektivische Ansicht eines Teils einer Verpackungsanlage 1. Die Verpackungsanlage 1 weist eine Förder- und Dreheinheit 2 sowie eine Fördereinheit 3 und eine weitere Fördereinheit 4 auf.

Die Fördereinheit 3 führt stückige Produkte 5, beispielsweise in Schlauchbeutel verpackte Schokoladenriegel, in einer ersten Orientierung der Förder- und Dreheinheit 2 zu. Wie aus Fig. 1 zu erkennen ist, sind die stückigen Produkte 5 in der ersten Orientierung so orientiert, dass sie in Längsrichtung, also mit einer führenden kurzen Seite, einem sogenannten "short side leading", transportiert werden.

Die weitere Fördereinheit 4 übernimmt die stückigen Produkte 5 von der Förder- und Dreheinheit 2 in einer zweiten Orientierung und führt diese von der Förder- und Dreheinheit 2 weg. Die zweite Orientierung entspricht einer Orientierung in einer Querrichtung, also mit einer führenden langen Seite, nämlich einem sogenannten "long side leading".

Es ist anzumerken, dass aus Gründen einer übersichtlichen Darstellung nicht sämtliche Produkte mit einem Bezugszeichen, hier 5, versehen sind.

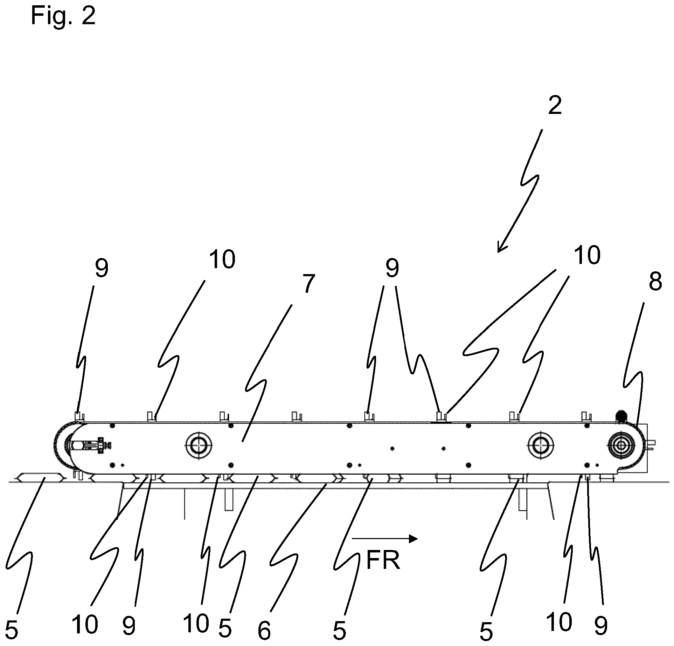

**Fig. 2** zeigt eine Seitenansicht auf die Förder- und Dreheinheit 2. Die Förder- und Dreheinheit 2 weist eine Produktauflage 6 und eine Mitnehmertransporteinheit 7 auf. Die Produktauflage 6 ist dazu ausgebildet, dass das stückige Produkt 5 in einer vorbestimmten Förderrichtung FR darauf gleitet. Die Produktauflage 6 weist ferner eine Einrichtung auf, um entlang der Förderrichtung FR eine unterschiedliche Reibkraft zwischen der Produktauflage 6 und dem Produkt 5 bereitzustellen. Diese Einrichtung enthält eine Oberflächenbeschichtung der Produktauflage 6, die in verschiedenen Abschnitten der Produktauflage 6 entlang der Förderrichtung unterschiedliche Reibungskoeffizienten aufweist. In einer alternativen Ausführungsform können auch Öffnungen in der Produktauflage 6 und eine Vakuumanlage vorgesehen sein. Über die Größe und Anzahl der Öffnungen sowie Betriebsparameter der Vakuumanlage kann dann die unterschiedliche Reibkraft durch den eingestellten Unterdruck, der das Produkt über die Löcher an die Produktauflage 6 saugt, bereitgestellt werden.

Die Mitnehmertransporteinheit 7 ist oberhalb der Produktauflage 6 angeordnet und weist ein umlaufendes Band 8 auf. An dem umlaufenden Band 8 sind mehrere erste Mitnehmer 9 und mehrere zweite Mitnehmer 10 angeordnet, die in der Förderrichtung FR simultan bewegbar der Produktauflage 6 zugewandt sind. Auch hier sind aus Übersichtlichkeitsgründen nicht sämtliche Produkte und Mitnehmer mit einem Bezugszeichen versehen. In alternativen Ausführungsformen können die ersten Mitnehmer 9 und die zweiten Mitnehmer 10 auch beispielsweise an einer umlaufenden Kette oder einem hin- und hergehenden Zylinder angebracht sein und/oder eine andere als die gezeigte Anzahl des ersten Mitnehmers 9 und des zweiten Mitnehmers 10 können vorgesehen sein solange mindestens ein erster Mitnehmer 9 und ein zweiter Mitnehmer 10 vorhanden sind.

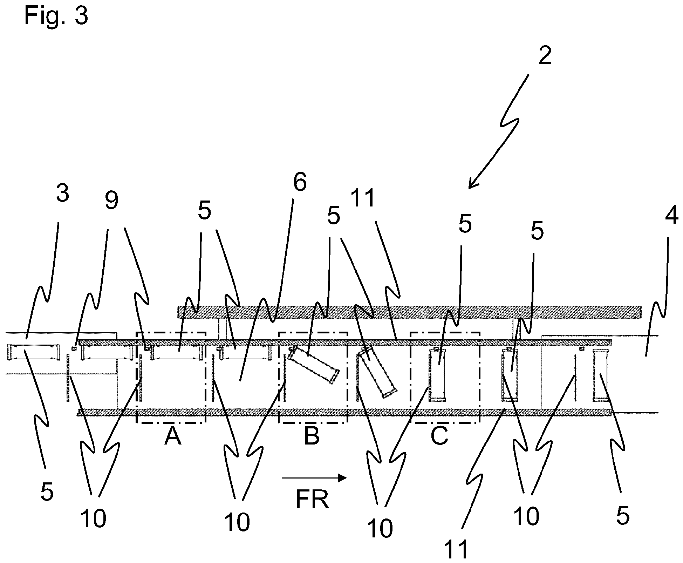

**Fig. 3** zeigt eine Draufsicht auf die Produktauflage 6 der Förder- und Dreheinheit 2, bei der zur besseren Veranschaulichung die Mitnehmertransporteinheit 7 (Fig. 2) ausgeblendet ist. In Fig. 3 ist eine Momentaufnahme gezeigt, die die Produkte 5 in den verschiedenen Zuständen ihrer Förderung und Drehung darstellt. In Fig. 3 von links nach rechts, nämlich in der Förderrichtung FR wird das Produkt 5 in seiner ersten Orientierung "short side leading" der Produktauflage 6 zugeführt und dann, wie nachstehend beschrieben, durch den ersten Mitnehmer 9 und den zweiten Mitnehmer 10 zu der zweiten Orientierung "long side leading" gedreht und in der zweiten Orientierung in der Förderrichtung FR weitergefördert.

Die Produktauflage 6 weist Seitenführungen 11 auf, die verhindern, dass die Produkte 5 seitlich von der Produktauflage 6 herabfallen. In alternativen Ausführungsformen sind die Seitenführungen 11 nicht vorgesehen. Ferner ist die Produktauflage 6 so ausgerichtet, dass die Förderrichtung FR einer Richtung entspricht, in der die Produkte 5 auf der Fördereinheit 3 und der weiteren Fördereinheit 4 transportiert werden. In alternativen Ausführungsformen sind die Fördereinheit 3 und die weitere Fördereinheit 4 in der gleichen Richtung ausgerichtet und die Mitnehmertransporteinheit 7 schließt einen Winkel mit der Fördereinheit 3 und der weiteren Fördereinheit 4 ein, so dass die Verpackungsanlage so ausgebildet ist, dass die Förderrichtung FR einen Winkel zu einer Förderrichtung auf der Fördereinheit 3 und der weiteren Fördereinheit 4 einschließt.

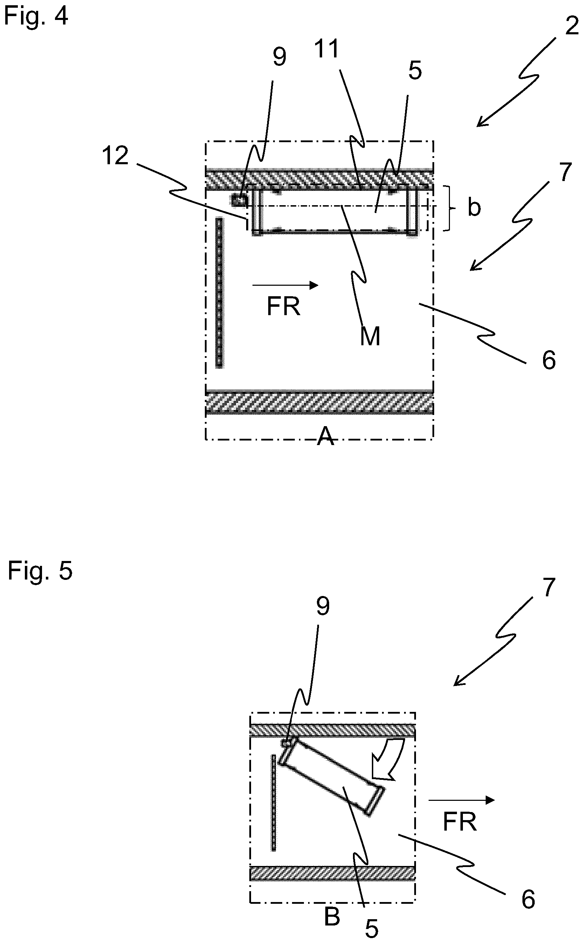

**Fig. 4** zeigt eine stark vergrößerte Ansicht eines Ausschnitts A aus Fig. 3 in einer Situation vor einem Anstoßen des ersten Mitnehmers 9 an das Produkt 5. Die Produktauflage 6 weist an einem Ende einen vorbestimmten Aufnahmebereich 12 auf, in dem das der Förder- und Dreheinheit 2 zugeführte Produkt 5 in der ersten Orientierung auf der Produktauflage 6 aufliegt. Eine Breite b des Aufnahmebereichs 12 wird über eine Breite des Produkts 5 in einer Breitenrichtung senkrecht zu der Förderrichtung FR definiert und entspricht insbesondere der Breite des Produkts 5. Der erste Mitnehmer 9 ist so an der Mitnehmertransporteinheit 7 angebracht, dass er einen in der Förderrichtung FR vorauseilenden an dem Produkt 5 anstoßenden Flächenabschnitt, nämlich eine sogenannte Wirkfläche, besitzt. Da der erste Mitnehmer 9 in dieser Ausführungsform mit einem rechteckigen Querschnitt versehen ist, entspricht somit der an dem Produkt 5 anstoßende Flächenabschnitt der gesamten vorderen Fläche des Mitnehmers 9. In einer alternativen Ausführungsform, in dem der Mitnehmer 9 beispielsweise mit einem zylindrischen Querschnitt versehen ist, entspricht der an dem Produkt 5 anstoßende Flächenabschnitt je nach genauer Ausführung des Produkts 5 einem Punkt oder einer Linie. Dieser an dem Produkt 5 anstoßende Flächenabschnitt befindet sich in einem Abschnitt des Aufnahmebereichs 12 zwischen einer Mitte M in der Breitenrichtung und einem Rand des Aufnahmebereichs 12 in Richtung einer näher zu dem Aufnahmebereich 12 gelegenen Grenze der Produktauflage 6. Diese Begrenzung entspricht in dieser Ausführungsform der Seitenführung 11, kann in den alternativen Ausführungsformen ohne die Seitenführung 11 aber auch einer Abschlusskante der Produktauflage 6 entsprechen. Bei dieser Festlegung wird davon ausgegangen, dass das Produkt 5 einen Massenschwerpunkt hat, der in der Breitenrichtung in der Mitte M liegt.

In weiteren alternativen Ausführungsformen kann sich der an dem Produkt 5 anstoßende Flächenabschnitt des ersten Mitnehmers 9 auch in einem Abschnitt des Aufnahmebereichs 12 zwischen der Mitte M der Breitenrichtung und einem Rand des Aufnahmebereichs 12 in Richtung einer weiter von dem Aufnahmebereichs 12 weg gelegenen Begrenzung der Produktauflage 6 befinden, solange durch ein Anstoßen des ersten Mitnehmers 9 an dem Produkt 5 ein Drehimpuls eingeleitet wird und genügend Platz vorhanden ist, um eine Drehung zu der zweiten Orientierung auszuführen.

Fig. 5 zeigt eine vergrößerte Ansicht eines Ausschnitts aus Fig. 3 während einer Drehung des Produkts 5.

In dieser Ansicht ist eine Situation gezeigt, in der der erste Mitnehmer 9 mit seiner Wirkfläche an dem auf der Produktauflage 6 liegenden Produkt 5 anstößt und in Kontakt kommt. Der erste Mitnehmer 9 ist so an der Mitnehmertransporteinheit 7 angeordnet, dass er bei seiner Bewegung in der Förderrichtung FR an das in der ersten Orientierung auf der Produktauflage 6 aufliegende Produkt so anstößt, dass sich dessen Orientierung durch Einbringung des Drehimpulses zu der zweiten Orientierung hin ändert.

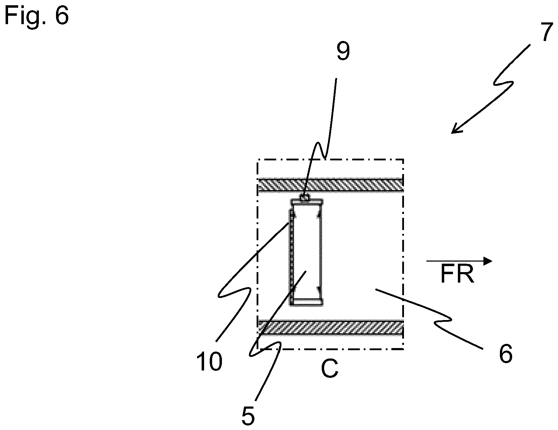

Fig. 6 zeigt eine vergrößerte Ansicht eines Ausschnitts aus Fig. 3 während einer Förderung des Produkts 5.

In dieser Ansicht ist eine Situation gezeigt, in der der zweite Mitnehmer 10 das auf der Produktauflage 6 liegende Produkt 5 in der Förderrichtung FR transportiert. Dazu ist der zweite Mitnehmer 10 so an der Mitnehmertransporteinheit 7 angeordnet, dass er bei seiner Bewegung in der Förderrichtung FR mit seinem an dem Produkt 5 anstoßenden Flächenabschnitt, der sogenannten Wirkfläche, so anstößt, dass er bei seiner Bewegung in der Förderrichtung FR das Produkt 5 in der zweiten Orientierung in der Förderrichtung FR weitertransportiert. Die Wirkfläche ist hier die gesamte dem Produkt 5 zugewandte Fläche des zweiten Mitnehmers 10. In alternativen Ausführungsformen besteht die Wirkfläche aus mindestens zwei Punkten, die an dem Produkt 5 so anstoßen, dass die zweite Orientierung beibehalten oder erzeugt wird.

Diese zwei Punkte sind so gewählt, dass sie bezüglich einer Mitte des Produkts 5, wobei wiederum davon ausgegangen wird, dass sich der Massenschwerpunkt in der Mitte des Produkts 5 befindet, auf gegenüberliegenden Seiten von der Mitte liegen.

Der erste Mitnehmer 9 und der zweite Mitnehmer 10 sind in einer Breitenrichtung senkrecht zu der Förderrichtung FR nebeneinander an der Mitnehmertransporteinheit 7 angeordnet. Dabei liegt ein Flächenabschnitt der Wirkfläche des ersten Mitnehmers 9 in der Förderrichtung FR vorderhalb von jedem Flächenabschnitt der Wirkfläche des zweiten Mitnehmers 10. Der erste Mitnehmer 9 und der zweite Mitnehmer 10 sind hier als separate Mitnehmer dargestellt. In alternativen Ausführungsformen können der erste Mitnehmer 9 und der zweite Mitnehmer 10 integral ausgebildet sein. In einer weiteren alternativen Ausführungsform ist der Flächenabschnitt der Wirkfläche des ersten Mitnehmers 9 nicht vorderhalb von jedem Flächenabschnitt der Wirkfläche des zweiten Mitnehmers 10, aber in der Förderrichtung FR versetzt dazu angeordnet.

Im Betrieb wird zum Fördern und zum Ändern der Orientierung des stückigen Produkts 5 das Produkt 5 zunächst auf die Produktauflage 6 der Förder- und Dreheinheit 2 in der vorbestimmten ersten Orientierung zugeführt, wobei die erste Orientierung der sogenannten "short side leading"-Orientierung entspricht.

Die Änderung der Orientierung des Produkts 5 aus der ersten Orientierung zu der zweiten Orientierung erfolgt mittels des in der vorbestimmten Förderrichtung FR bewegten ersten Mitnehmers 9 der Förder- und Dreheinheit 2 durch das bezüglich der Richtung senkrecht zu der Förderrichtung FR außermittige Anstoßen des ersten Mitnehmers 9 an das Produkt 5 und dadurch das Einbringen eines Drehimpulses in das Produkt 5, was dann erfolgen kann, wenn sich der Massenschwerpunkt des Produkts 5 mittig befindet.

Das Produkt 5 wird in der zweiten Orientierung durch Anstoßen des in der Förderrichtung FR bewegten zweiten Mitnehmers 10 an das Produkt 5 an mindestens zwei in der Richtung senkrecht zu der Förderrichtung FR liegenden Punkten dann in der Förderrichtung FR weiter gefördert. Der Abstand des ersten Mitnehmers 9 und des zweiten Mitnehmers 10 in der Förderrichtung FR und die Geschwindigkeit der Mitnehmer 9, 10 in der Förderrichtung **FR** werden dabei empirisch so ermittelt, dass der zweite Mitnehmer 10 an dem Produkt 5 tatsächlich so anstoßen kann, dass es in der zweiten Orientierung verbleibt und weiter gefördert werden kann.

Während der Änderung der Orientierung, also während des Drehens, wird mittels der Produktauflage, auf der das Produkt während der Änderung der Orientierung und des Förderns aufliegt, eine definierte Reibkraft auf das Produkt 5 aufgebracht. Diese Reibkraft entsteht durch eine geeignete Auswahl eines Materials und einer Oberflächenstruktur der Produktauflage 6, um, in Verbindung mit den Eigenschaften des Produkts 5, einen gewünschten Reibungskoeffizienten zu erzielen. Der Reibungskoeffizient der Produktauflage 6 ist über die Länge der Produktauflage 6 konstant, kann in alternativen Ausführungsformen aber auch unterschiedlich gewählt werden, um für die jeweilige Situation besser geeignet zu sein. **In** weiteren alternativen Ausführungsformen wird die definierte Reibkraft mittels Öffnungen in der Produktauflage 6 und einer Vakuumanlage aufgebracht, wobei an den Öffnungen ein Unterdruck eingestellt wird, der in Abhängigkeit der gewählten Fördergeschwindigkeit und in Abhängigkeit des Produktgewichts veränderbar ist.

Mehrere Produkte 5 werden von mehreren ersten Mitnehmern 9 und mehreren zweiten Mitnehmern 10, die auf dem umlaufenden Band 8 befestigt sind, gefördert und ihre Orientierung geändert. Dabei schließen die zweite Orientierung und die erste Orientierung einen zumindest annähernd rechten Winkel ein, sodass ein Layout der gesamten Verpackungsanlage möglichst platzsparend, nämlich gerade, gestaltet werden kann. Der Abstand der ersten Mitnehmer 9 untereinander und der Abstand der zweiten Mitnehmer 10 untereinander sind auf den Abstand der zu der Förder- und Dreheinheit 2 zugeführten Produkte in der ersten Ausrichtung abgestimmt.

Nach dem Drehen und Fördern der Produkte 5 in der Förder- und Dreheinheit 2 werden die Produkte 5 in der zweiten Orientierung durch die weitere Fördereinheit 4 übernommen. Eine Fördergeschwindigkeit der weiteren Fördereinheit 5 ist höher als die Fördergeschwindigkeit der Förder- und Dreheinheit 2 in der Förderrichtung FR. Alternativ entspricht die Fördergeschwindigkeit der weiteren Fördereinheit 4 der Fördergeschwindigkeit der Förder- und Dreheinheit 2 in der Förderrichtung FR. Die Beschreibung und die Zeichnungen sind dementsprechend lediglich als eine Illustration der Erfindung zu betrachten, wie sie durch die beigefügten Ansprüche definiert ist, und sollen alle Modifikationen, Variationen, Kombinationen oder Äquivalente abdecken, die in den Anwendungsbereich der vorliegenden Erfindung fallen.

### Bezugszeichenliste

- 1: Verpackungsanlage
- 2: Förder- und Dreheinheit
- 3: Fördereinheit
- 4: weitere Fördereinheit
- 5: Produkt
- 6: Produktauflage
- 7: Mitnehmertransporteinheit
- 8: umlaufendes Band
- 9: erster Mitnehmer
- 10: zweiter Mitnehmer
- 11: Seitenführung
- 12: Aufnahmebereich

- b: Breite
- FR: Förderrichtung
- M: Mitte

## Patentansprüche

1. Verfahren zum Fördern und zum Ändern einer Orientierung eines stückigen Produkts (5) mit den Schritten:
Zuführen des Produkts (5) auf eine Produktauflage (6) einer Förder- und Dreheinheit (2) in einer vorbestimmten ersten Orientierung;
Änderung der Orientierung des Produkts (5) aus der ersten Orientierung zu einer zweiten Orientierung mittels eines in einer vorbestimmten Förderrichtung (FR) bewegten ersten Mitnehmers (9) der Förder- und Dreheinheit (2) durch ein bezüglich einer Richtung senkrecht zu der Förderrichtung (FR) außermittiges Anstoßen des ersten Mitnehmers (9) an das Produkt (5) und dadurch Einbringen eines Drehimpulses in das Produkt (5); und
Fördern des Produkts (5) in der zweiten Orientierung in der Förderrichtung (FR) durch Anstoßen eines in der Förderrichtung (FR) bewegten zweiten Mitnehmers (10) an das Produkt (5) an mindestens zwei in der Richtung senkrecht zu der Förderrichtung (FR) bezüglich einer Mitte (M) des Produkts (5) auf gegenüberliegenden Seiten liegenden Punkten.

2. Verfahren gemäß Anspruch 1, wobei
auf das Produkt (5) während der Änderung der Orientierung bzw. während des Förderns mittels der Produktauflage (6), auf der das Produkt (5) während der Änderung der Orientierung und des Förderns aufliegt, eine definierte Reibkraft aufgebracht wird, um den Drehimpuls abzubremsen bzw. das Produkt (5) an dem zweiten Mitnehmer (10) in seiner Position zu halten.

3. Verfahren gemäß Anspruch 2, wobei
die Reibkraft entlang einer Förderstrecke auf der Produktauflage (6) unterschiedlich vorausgewählt, vorzugsweise einstellbar, ist.

4. Verfahren gemäß einem der vorangehenden Ansprüche, mit dem Schritt:
Übernehmen und Weiterbefördern des Produkts (5) in der zweiten Orientierung durch eine weitere Fördereinheit (4).

5. Verfahren gemäß Anspruch 4, wobei eine Fördergeschwindigkeit der weiteren Fördereinheit (4) höher als eine Fördergeschwindigkeit der Förder- und Dreheinheit (2) ist.

6. Verfahren gemäß einem der vorangehenden Ansprüche, wobei
mehrere erste Mitnehmer (9) und mehrere zweite Mitnehmer (10) auf einem umlaufenden Band (8) befestigt vorgesehen sind, und mehrere Produkte (5) gleichzeitig durch eine umlaufende Bewegung des umlaufenden Bands (8) gefördert werden und ihre Orientierung geändert wird.

7. Verfahren gemäß einem der vorangehenden Ansprüche, wobei
die zweite Orientierung zu der ersten Orientierung einen zumindest annähernd rechten Winkel einschließt.

8. Förder- und Dreheinheit (2) zum Ausführen eines Verfahrens gemäß einem der vorangehenden Ansprüche, wobei die Förder- und Dreheinheit (2) aufweist:
eine Mitnehmertransporteinheit (7), und
eine Produktauflage (6), wobei
die Produktauflage (6) dazu ausgebildet ist, dass das stückige Produkt (5) in einer vorbestimmten Förderrichtung (FR) darauf gleitet, und
die Mitnehmertransporteinheit (7)
oberhalb der Produktauflage (6) angeordnet ist, und
mindestens einen ersten Mitnehmer (9) und mindestens einen zweiten Mitnehmer (10), die in der Förderrichtung (FR) vorzugsweise simultan bewegbar der Produktauflage (6) zugewandt sind, aufweist, wobei,
der mindestens eine erste Mitnehmer (9) und der mindestens eine zweite Mitnehmer (10) jeweils eine Wirkfläche aufweisen, die dazu ausgebildet ist, mit dem Produkt (5) in Kontakt zu kommen,
der mindestens eine erste Mitnehmer (9) und der mindestens eine zweite Mitnehmer (10) in einer Breitenrichtung des Produkts senkrecht zu der Förderrichtung (FR) nebeneinander an der Mitnehmertransporteinheit (7) angeordnet sind, und
der erste Mitnehmer (9) einen Flächenabschnitt seiner Wirkfläche aufweist, der in der Förderrichtung (FR) versetzt zu jedem Flächenabschnitt der Wirkfläche des zweiten Mitnehmers (10) angeordnet ist, insbesondere in der Förderrichtung (FR) vorderhalb von jedem Flächenabschnitt der Wirkfläche des zweiten Mitnehmers (10) liegt.

9. Förder- und Dreheinheit (2) zum Ausführen eines Verfahrens gemäß einem der vorangehenden Ansprüche, wobei die Förder- und Dreheinheit (2) aufweist:
eine Mitnehmertransporteinheit (7), und
eine Produktauflage (6), wobei
die Produktauflage (6) dazu ausgebildet ist, dass das stückige Produkt (5) in einer vorbestimmten Förderrichtung (FR) darauf gleitet, und
die Mitnehmertransporteinheit (7)
oberhalb der Produktauflage (6) angeordnet ist, und
mindestens einen ersten Mitnehmer (9) und mindestens einen zweiten Mitnehmer (10), die in der Förderrichtung (FR) simultan bewegbar der Produktauflage (6) zugewandt sind, aufweist, wobei,
der mindestens eine erste Mitnehmer (9) so an der Mitnehmertransporteinheit (7) angeordnet ist, dass er dazu ausgebildet ist, bei seiner Bewegung in der Förderrichtung (FR) an das in der ersten Orientierung auf der Produktauflage (6) aufliegende Produkt (5) so anzustoßen, dass sich dessen Orientierung durch Einbringen des Drehimpulses zu der zweiten Orientierung ändert, und
der mindestens eine zweite Mitnehmer (10) so an der Mitnehmertransporteinheit (7) angeordnet ist, dass er dazu ausgebildet ist, bei seiner Bewegung in der Förderrichtung (FR) an mindestens zwei in einer Richtung senkrecht zu der Förderrichtung (FR) bezüglich einer Mitte (M) des Produkts (5) in der zweiten Orientierung auf gegenüberliegenden Seiten liegenden Punkten anzustoßen.

10. Förder- und Dreheinheit (2) gemäß Anspruch 8 oder 9, wobei
die Produktauflage (6) an einem Ende einen vorbestimmten Aufnahmebereich (12) aufweist, in dem das der Förder- und Dreheinheit (2) zugeführte Produkt (5) in der ersten Orientierung auf der Produktauflage (6) aufliegt, wobei eine Breite (b) des Aufnahmebereichs (12) über eine Breite des Produkts (5) in einer Breitenrichtung senkrecht zu der Förderrichtung (FR) definiert ist, und
der erste Mitnehmer (9) so an der Mitnehmertransporteinheit (7) angebracht ist, dass er einen in der Förderrichtung (FR) vorauseilenden an dem Produkt (5) anstoßenden Flächenabschnitt hat, der sich in einem Abschnitt des Aufnahmebereichs (12) zwischen einer Mitte (M) in der Breitenrichtung und einem Rand des Aufnahmebereichs (12) in Richtung einer näher zu dem Aufnahmebereich (12) gelegenen Grenze der Produktauflage (6) entlang der Förderrichtung (FR) befindet.

11. Förder- und Dreheinheit (2) gemäß einem der Ansprüche 8 bis 10, wobei
die Mitnehmertransporteinheit (7) ein umlaufendes Band aufweist, an dem mehrere erste Mitnehmer (9) und mehrere zweite Mitnehmer (10) angeordnet sind.

12. Förder- und Dreheinheit (2) gemäß einem der Ansprüche 8 bis 11, wobei
mehrere erste Mitnehmer (9) und mehrere zweite Mitnehmer (10) vorgesehen sind, und jeweils ein erster Mitnehmer (9) und ein zweiter Mitnehmer (10) integral ausgebildet sind.

13. Förder- und Dreheinheit (2) gemäß einem der Ansprüche 8 bis 12, wobei
die Produktauflage (6) eine Einrichtung aufweist, die dazu konfiguriert ist, entlang der Förderrichtung (FR) eine unterschiedliche Reibkraft zwischen der Produktauflage (6) und dem Produkt (5) bereitzustellen.

14. Förder- und Dreheinheit (2) gemäß Anspruch 13, wobei
die Einrichtung Öffnungen in der Produktauflage (6) aufweist, die vorzugsweise an eine Vakuumanlage angeschlossen sind.

15. Verpackungsanlage (1), die eine Förder- und Dreheinheit (2) gemäß einem der Ansprüche 8 bis 14, eine Fördereinheit (3), die dazu ausgebildet ist, das Produkt (5) der ersten Orientierung auf die Produktauflage (6) zuzuführen, und eine weitere Fördereinheit (4), die dazu ausgebildet ist, das Produkt (5) in der zweiten Orientierung zu übernehmen, aufweist.

## Claims

1. Method for conveying and for changing an orientation of a piece product (5) with the steps:
feeding the product (5) onto a product support (6) of a conveying and rotating unit (2) in a predetermined first orientation;
changing the orientation of the product (5) from the first orientation to a second orientation by means of a first driver (9) of the conveying and rotating unit (2), which first driver is moved in a predetermined conveying direction (FR), by the first driver (9) abutting against the product (5) eccentrically with respect to a direction perpendicular to the conveying direction (FR) and thereby introducing a rotational impulse into the product (5); and
conveying the product (5) in the second orientation in the conveying direction (FR) by abutting of a second driver (10), which is moved in the conveying direction (FR), against the product (5) at at least two points lying on opposite sides, with respect to a center (M) of the product (5), in the direction perpendicular to the conveying direction (FR).

2. Method according to claim 1, wherein
a defined frictional force is applied to the product (5) during the change of the orientation or during the conveying by means of the product support (6), on which the product (5) rests during the change of the orientation and the conveying, in order to brake the rotational impulse or to hold the product (5) in its position on the second driver (10), respectively.

3. Method according to claim 2, wherein
the frictional force is differently preselected, preferably adjustable, along a conveying distance on the product support (6).

4. Method according to one of the preceding claims, with the step:
receiving and conveying further the product (5) in the second orientation by a further conveying unit (4).

5. Method according to claim 4, wherein a conveying speed of the further conveying unit (4) is higher than a conveying speed of the conveying and rotating unit (2).

6. Method according to one of the preceding claims, wherein
a plurality of first drivers (9) and a plurality of second drivers (10) are provided fastened on a circulating belt (8), and a plurality of products (5) are conveyed simultaneously by a circulating movement of the circulating belt (8) and their orientation is changed.

7. Method according to one of the preceding claims, wherein
the second orientation encloses an at least approximately right angle to the first orientation.

8. Conveying and rotating unit (2) for carrying out a method according to one of the preceding claims, wherein the conveying and rotating unit (2) comprises:
a driver transport unit (7), and
a product support (6), wherein
the product support (6) is designed such that the piece-like product (5) slides thereon in a predetermined conveying direction (FR), and
the driver transport unit (7)
is arranged above the product support (6), and
comprises at least one first driver (9) and at least one second driver (10) which are preferably simultaneously movable in the conveying direction (FR) and face the product support (6), wherein
the at least one first driver (9) and the at least one second driver (10) each have an active surface which is designed to come into contact with the product (5),
the at least one first driver (9) and the at least one second driver (10) are arranged next to one another on the driver transport unit (7) in a width direction of the product perpendicular to the conveying direction (FR), and
the first driver (9) comprises a surface section of its active surface which is arranged offset with respect to each surface section of the active surface of the second driver (10) in the conveying direction (FR), in particular lies in front of each surface section of the active surface of the second driver (10) in the conveying direction (FR).

9. Conveying and rotating unit (2) for carrying out a method according to one of the preceding claims, wherein the conveying and rotating unit (2) comprises:
a driver transport unit (7), and
a product support (6), wherein
the product support (6) is designed such that the piece-like product (5) slides thereon in a predetermined conveying direction (FR), and
the driver transport unit (7)
is arranged above the product support (6), and
comprises at least one first driver (9) and at least one second driver (10) which are simultaneously movable in the conveying direction (FR) and face the product support (6), wherein
the at least one first driver (9) is arranged on the driver transport unit (7) such that it is designed, during its movement in the conveying direction (FR), to abut against the product (5) resting on the product support (6) in the first orientation in such a way that the orientation thereof changes toward the second orientation by introducing the rotational impulse, and
the at least one second driver (10) is arranged on the driver transport unit (7) such that it is designed, during its movement in the conveying direction (FR), to abut against at least two points lying on opposite sides, with respect to a center (M) of the product (5) in the second orientation, in a direction perpendicular to the conveying direction (FR).

10. Conveying and rotating unit (2) according to claim 8 or 9, wherein
at one end, the product support (6) comprises a predetermined receiving region (12) in which the product (5) which is fed to the conveying and rotating unit (2) rests on the product support (6) in the first orientation, wherein a width (b) of the receiving region (12) is defined over a width of the product (5) in a width direction perpendicular to the conveying direction (FR), and
the first driver (9) is attached to the driver transport unit (7) such that it has a surface section abutting against the product (5), which surface section leads in the conveying direction (FR) and is situated in a section of the receiving region (12) between a center (M) in the width direction and an edge of the receiving region (12) in the direction of a boundary of the product support (6), which boundary is situated closer to the receiving region (12), along the conveying direction (FR).

11. Conveying and rotating unit (2) according to one of claims 8 to 10, wherein
the driver transport unit (7) comprises a circulating belt on which a plurality of first drivers (9) and a plurality of second drivers (10) are arranged.

12. Conveying and rotating unit (2) according to one of claims 8 to 11, wherein
a plurality of first drivers (9) and a plurality of second drivers (10) are provided, and in each case a first driver (9) and a second driver (10) are formed integrally.

13. Conveying and rotating unit (2) according to one of claims 8 to 12, wherein
the product support (6) has a device which is configured to provide a different frictional force between the product support (6) and the product (5) along the conveying direction (FR).

14. Conveying and rotating unit (2) according to claim 13, wherein
the device has openings in the product support (6) which are preferably connected to a vacuum system.

15. Packaging plant (1) which comprises a conveying and rotating unit (2) according to one of claims 8 to 14, a conveying unit (3) which is designed to feed the product (5) in the first orientation onto the product support (6), and a further conveying unit (4) which is designed to receive the product (5) in the second orientation.

## Revendications

1. Procédé de transport et de changement d'orientation d'un produit (5) en morceaux, comprenant les étapes suivantes :
guidage du produit (5) sur un support de produit (6) d'une unité de transport et de rotation (2) dans une première orientation prédéterminée ;
changer l'orientation du produit (5) de la première orientation à une deuxième orientation au moyen d'un premier entraîneur (9) de l'unité de transport et de rotation (2), déplacé dans une direction de transport (FR) prédéterminée, en faisant buter le premier entraîneur (9) sur le produit (5) de manière excentrée par rapport à une direction perpendiculaire à la direction de transport (FR) et introduire ainsi une impulsion de rotation dans le produit (5) ; et
transporter le produit (5) dans la deuxième orientation dans la direction de transport (FR) en faisant buter un deuxième entraîneur (10), déplacé dans la direction de transport (FR), sur le produit (5) à au moins deux points situés sur des côtés opposés dans la direction perpendiculaire à la direction de transport (FR) par rapport à un centre (M) du produit (5).

2. Procédé selon la revendication 1, dans lequel
une force de friction définie est appliquée sur le produit (5) pendant le changement d'orientation ou pendant le transport au moyen du support de produit (6), sur lequel le produit (5) repose pendant le changement d'orientation et du transport, afin de freiner l'impulsion de rotation ou maintenir le produit (5) sur le deuxième entraîneur (10) dans sa position.

3. Procédé selon la revendication 2, dans lequel
la force de friction est présélectionnée de manière différente, de préférence réglable, le long d'une section de transport sur le support de produit (6).

4. Procédé selon l'une des revendications précédentes, comprenant l'étape suivante :
recevoir et continuer à transporter le produit (5) dans la deuxième orientation par une autre unité de transport (4).

5. Procédé selon la revendication 4, dans lequel une vitesse de transport de l'autre unité de transport (4) est supérieure à une vitesse de transport de l'unité de transport et de rotation (2).

6. Procédé selon l'une des revendications précédentes, dans lequel
plusieurs premiers entraîneurs (9) et plusieurs deuxièmes entraîneurs (10) sont fournis fixés sur une bande tournante (8), et par un mouvement tournant de la bande tournante (8), plusieurs produits (5) sont transportés simultanément et leur orientation est modifiée.

7. Procédé selon l'une des revendications précédentes, dans lequel
la deuxième orientation forme un angle au moins approximativement droit par rapport à la première orientation.

8. Unité de transport et de rotation (2) pour exécuter un procédé selon l'une des revendications précédentes, l'unité de transport et de rotation (2) comprenant :
une unité de transport d'entraîneur (7), et
un support de produit (6), dans lequel
le support de produit (6) est conçu de telle sorte que le produit (5) en morceaux glisse sur celui-ci dans une direction de transport (FR) prédéterminée, et
l'unité de transport d'entraîneur (7)
est disposée au-dessus du support de produit (6), et
comprend au moins un premier entraîneur (9) et au moins un deuxième entraîneur (10), qui font face au support de produit (6) de manière à être déplacable, de préférence simultanément, dans la direction de transport (FR), où
l'au moins un premier entraîneur (9) et l'au moins un deuxième entraîneur (10) comprennent chacun une surface d'action, qui est conçue pour entrer en contact avec le produit (5),
l'au moins un premier entraîneur (9) et l'au moins un deuxième entraîneur (10) sont disposés au niveau de l'unité de transport d'entraîneur (7) l'un à côté de l'autre dans une direction de largeur du produit perpendiculaire à la direction de transport (FR), et
le premier entraîneur (9) comprend une partie de surface de sa surface d'action, qui est disposée dans la direction de transport (FR) de manière décalée par rapport à chaque partie de surface de la surface d'action du deuxième entraîneur (10), en particulier est située dans la direction de transport (FR) à l'avant de chaque partie de surface de la surface d'action du deuxième entraîneur (10).

9. Unité de transport et de rotation (2) pour exécuter un procédé selon l'une des revendications précédentes, l'unité de transport et de rotation (2) comprenant :
une unité de transport d'entraîneur (7), et
un support de produit (6), dans lequel
le support de produit (6) est conçu de telle sorte que le produit (5) en morceaux glisse sur celui-ci dans une direction de transport (FR) prédéterminée, et
l'unité de transport d'entraîneur (7)
est disposée au-dessus du support de produit (6), et
comprend au moins un premier entraîneur (9) et au moins un deuxième entraîneur (10), qui font face au support de produit (6) de manière à être déplacable simultanément dans la direction de transport (FR), où
l'au moins un premier entraîneur (9) est disposé au niveau de l'unité de transport d'entraîneur (7), de telle sorte qu'il est conçu pour faire buter, lors de son mouvement dans la direction de transport (FR), le produit (5), situé dans la première orientation sur le support de produit (6), de telle sorte que son orientation se modifie par introduction de l'impulsion de rotation dans la deuxième orientation, et
l'au moins un deuxième entraîneur (10) est disposé au niveau de l'unité de transport d'entraîneur (7), de telle sorte qu'il est conçu pour faire buter, lors de son mouvement dans la direction de transport (FR), à au moins deux points situés sur des côtés opposés dans une direction perpendiculaire à la direction de transport (FR) par rapport à un centre (M) du produit (5) dans la deuxième orientation.

10. Unité de transport et de rotation (2) selon la revendication 8 ou 9, dans laquelle
le support de produit (6) comprend à une extrémité une zone de réception (12) prédéterminée, dans laquelle le produit (5), amené à l'unité de transport et de rotation (2), repose sur le support de produit (6) dans la première orientation, où une largeur (b) de la zone de réception (12) est définie par rapport à une largeur du produit (5) dans une direction de largeur perpendiculaire à la direction de transport (FR), et
le premier entraîneur (9) est disposé au niveau de l'unité de transport d'entraîneur (7), de telle sorte qu'il présente une partie de surface en avant dans la direction de transport (FR), qui vient buter contre le produit (5) et qui se situe dans une partie de la zone de réception (12) entre un centre (M) dans la direction de largeur et un bord de la zone de réception (12) dans une direction d'une limite du support de produit (6) qui est plus proche de la zone de réception (12) le long de la direction de transport (FR).

11. Unité de transport et de rotation (2) selon l'une des revendications 8 à 10, dans laquelle
l'unité de transport d'entraîneur (7) comprend une bande tournante, au niveau de laquelle sont disposés plusieurs premiers entraîneurs (9) et plusieurs deuxièmes entraîneurs (10).

12. Unité de transport et de rotation (2) selon l'une des revendications 8 à 11, dans laquelle
plusieurs premiers entraîneurs (9) et plusieurs deuxièmes entraîneurs (10) sont fournis, et un premier entraîneur (9) et un deuxième entraîneur (10) sont respectivement formés d'un seul tenant.

13. Unité de transport et de rotation (2) selon l'une des revendications 8 à 12, dans laquelle
le support de produit (6) comprend un dispositif, qui est conçu pour fournir, une force de friction différente entre le support de produit (6) et le produit (5) le long de la direction de transport (FR).

14. Unité de transport et de rotation (2) selon la revendication 13, dans laquelle
le dispositif comprend des ouvertures dans le support de produit (6), qui sont de préférence raccordées à une installation à vide.

15. Installation d'emballage (1), qui comprend une unité de transport et de rotation (2) selon l'une des revendications 8 à 14, une unité de transport (3), qui est conçue pour amener le produit (5) dans la première orientation sur le support de produit (6), et une autre unité de transport (4), qui est conçue pour recevoir le produit (5) dans la deuxième orientation.
